# EUROPEAN PATENT APPLICATION

(11) **EP 1 168 733 A2**
(43) Date of publication of application: **02.01.2002**
(21) Application number: 01660068.6
(22) Date of filing: 11.04.2001
(51) Int. Cl.: H04L 12/58

(54) **Method and device for sending electronic messages**

(30) Priority: 29.06.2000 FI 20001552
(71) Applicant: NOKIA MOBILE PHONES LTD., 02150 Espoo (FI)
(72) Inventor: Will, Thomas, 45276 Essen (DE); Ratamo, Iikka, 25260 Vaskio (FI)
(74) Representative: Johansson, Folke Anders

(57) **Abstract**

The invention relates to a terminal device and a method of sending an electronic message from a terminal device to at least one recipient. The terminal device is connected to a network and comprises a display and means for entering a message. The method comprises the steps of storing (1) a predefined keyword and associating the stored keyword with a predefined activity, entering a message (2) for sending on the terminal device, searching (3) for a predefined keyword in the entered message before allowing the message to be sent, and in response to having found a predefined keyword performing the predefined activity (4, 5,6) associated with the particular keyword, and thereafter allowing the message to be sent.

## Description

The invention relates to sending electronic messages.

Nowadays different tools exist for sending messages to one another in electronic form. One of the most common tools is electronic mail (e-mail), where users have individual e-mail addresses to which another user can send an e-mail message typically from a computer connected to the Internet. An e-mail normally includes different basic information such as receiver address, subject of the message, the actual body text and can include one or more attachements such as text files, picture files etc. The actual message that is sent includes a header and a data part, wherein the header part may include information of the sender (From and Sender fields), recipients (To and Cc fields), and additional information, such as sending server (which the server adds and which the user typically doesn't see). The data part can include, apart from body text, also attachments such as text files, image files, executables, etc. Another type of electronic messaging that is wide-spread already in some countries is short messaging, where one can send a message from a mobile terminal, such as a mobile phone to another terminal. An example of short messaging is the so called Short Message Service specified in the GSM (Global System for Mobile communications) standard, where one can send a text message of a maximum of 160 characters. Typically sending a short message means typing in the body message with usually a limited keypad of a mobile phone and selecting the receiver from a short dial telephone directory stored in the memory of the phone or typing in the receiver's phone number.

A common mistake in sending e-mails with attachments, is that the sender forgets to attach the intended file to the e-mail. This then causes unnecessary spenditure of both the receiver's time of having to send back an e-mail stating that the attachment is missing, and the sender's time of having to re-send the e-mail, this time with the attachment. Further this unnecessarily loads the network in two additional e-mails being sent. It may also happen that the sender leaves for a business trip or vacation shortly after sending the e-mail and may not be available to re-send the missed attachment upon request. Also, nowadays e-mail is for many a daily working tool and some users send and receive a largenumber of messages every day. Also short messaging is being used much when one does not have a networked computer at hands, e.g. when one is tied up in a meeting, but one can still send short messages from the mobile phone. Thus e-mail and short messaging quickly consumers a lot of time of a working day. Therefore there is a desire to find solutions for making electronic messaging easier especially for saving time that is consumed in relation to sending electronic messages such as e-mail or short messages.

Now a method has been invented for use in sending electronic messages as well as a device using the method.

Thus according to a first aspect of the invention there is provided a method of sending an electronic message from a terminal device to at least one recipient, the terminal device being connected to a network and comprising a display and means for entering a message, the method being characterised in that it comprises:
storing a predefined keyword and associating the stored keyword with a predefined activity,
entering a message for sending on the terminal device,
searching for a predefined keyword in the entered message before allowing the message to be sent, and
in response to finding a predefined keyword performing the predefined activity associated with the particular keyword, and thereafter allowing the message to be sent.

According to a first embodiment the keyword relates to the possibility of there being a file attached to the electronic message, and the activity is checking whether a file is attached, and issuing a notification to the user of the terminal device if there is no file attached to the message.

According to a second embodiment the keyword is a name and the activity is searching for a corresponding name in a contacts directory stored in the terminal device, and if the name is found in the contacts directory, automatically entering the contacts information, such as e-mail address or telephone number, of the found name as a recipient address of the electronic message. Preferably, this second embodiment is implemented so that the activity includes first searching the recipient field (e.g. in case of an e-mail program) to see if it is empty, and executing the name search only if the recipient field is found to be empty.

According to a second aspect of the invention there is provided a terminal device comprising an application for sending an electronic message over a network, the terminal device being connected to the network and further comprising a display and means for entering a message, the terminal device being characterised in that it comprises:
means for storing a predefined keyword and associating the stored keyword with a predefined activity,
means for searching for a predefined keyword in a message entered before allowing the message to be sent, and
means for performing the predefined activity associated with the particular keyword in response to finding the particular predefined keyword, and means for sending the message after having performed said activity.

The terminal device can be a computer having a connection to a network, such as the Internet, or a mobile phone or other mobile messaging terminal capable of connection-oriented or connectionless communication over a network.

Similarly as regarding the method, the first and second embodiment disclosed above in relation to the keyword apply to a first and second embodiment of the terminal device.

The invention will be discussed below in detail by referring to the enclosed drawings, in which
Figure 1 illustrates a flow diagram of checking the existence of an e-mail attachment,
Figure 2 illustrates schematically a computer connected to a network and arranged to search an e-mail message to be sent, and
Figure 3 illustrates a block diagram of a mobile terminal device.

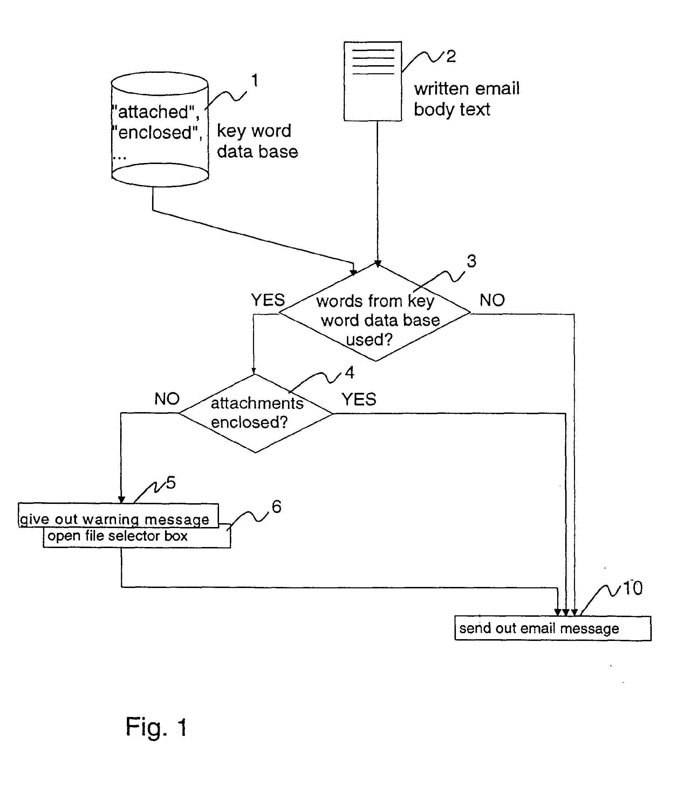

Figure 1 illustrates a first embodiment of the invention according to which the keyword to be searched relates to a file being attached to the electronic message, and the activity is checking whether a file is attached, and issuing a notification to the user of the first terminal device if there is no file attached to the message. Keywords such as "attached", "enclosed", "document", "see", or "file" etc are stored in a database 1 of the terminal device. These are different terms that one can think of that would be used in a message when a file is intended to be attached, such as "file attached", "I enclose a file", "in the document below", "see page 1 of the text file". Other rules, such as two keywords found in close proximity can be used as well, whereby the user is allowed to define such rules and keywords. For example if the user is working with a group of people on a project plan, which is e.g. an Excel table, then the keywords could be "project" and "plan" or "project" and "table". Preferably a stem is stored such as "enclos" for representing the words "enclosure", "enclosed", "enclosing" etc. Also common abbreviations such as "end", "incl" or "doc" can be considered as well as typical misspellings such as "atachment" or slang expressions that might exist in some languages. The keyword list may partly be fixed, and partly freely updated by the user. Also a self-learning keyword list may be used in the manner as is described in patent application WO 99/64965 of the same applicant. Once the user has typed in the message 2; i.e. the body text and/or the subject field in case of an e-mail message (note: some users send short messages by typing the message into the subject field only), and indicated to send the message e.g. by pressing the Send button, there is performed the step 3 of searching the keywords stored in the database 1 in the entered message 2, i.e. a search is made at least in the message body text but can as well be made in the message subject field to take into account users who may be using the subject field only but leaving the body field empty. If "no", then the message is sent in step 10. If "yes", then a check is performed at step 4 to find out whether an attachment is enclosed. If "yes", then the message is sent in step 10, but if "no" then at step 5 a notification or warning message is given to the user, for example as text indication on the display of the terminal device. Also a sound may be produced, e.g. a beep or the like. Further at step 6 a pop-up window to insert a file to the message may be opened, e.g. Insert-File pop-up window as in Microsoft Outlook™ to allow the user to attach the missing file. Once the file is attached, the e-mail message is sent at step 10.

This kind of e-mail attachment checker avoids unnecessary spenditure of both the receiver's time of having to send back an e-mail stating that the attachment is missing, and the sender's time of having to re-send the e-mail, this time with the attachment. Further the present invention helps to unnecessarily load the e-mail network by avoiding unnecessary e-mails being sent. Also disk space is saved, since every received e-mail consumes disk space. Disk space is especially a problem in some e-mail services such as yahoo and hotmail, where each user is given a limited amount of disk space, for example 3 Mb. Thus this embodiment helps to enable faster distribution of file attachments by reacting to a missing file when the body text hints that there should be one attached. Naturally, the user is allowed to switch off this feature, if desired.

According to a second embodiment of the invention the keyword is a name and the activity is searching for a corresponding name in a contacts directory stored in the first terminal device, and if the name is found in the contacts directory, automatically offering and/or entering the contacts information of the found name as a recipient address of the electronic message. For this purpose the database 1 may include a list of known names. Such a list may be downloaded from another database for example depending on country to download names used in that specific country in order to limit the size of the keyword database. Alternatively, this may be done by searching for keywords after which a name can be expected, such as "Dear Roland,..." whereby the word following after the keyword "Dear", in this case Roland is identified. This name, "Roland" is compared to a contacts directory stored in the terminal device. Let us assume that a short message (according to SMS) is to be sent. A search is made for "Roland", and if we assume there is a Roland Bender, then his GSM telephone number will be proposed to be selected as recipient address. The user will be allowed to accept or reject this selection. Also if there are several Rolands in contacts directory (or which can be a mere telephone directory in case of a mobile phone) then they will all be displayed (e.g. in alphabetical order by last name) and the user is allowed to select which Roland he/she wants to input as recipient, or can reject the selection. Alternatively, if the message is an e-mail the e-mail address (e.g. roland.bender@companymail.com) may be allowed to be selected from the contacts directory. A contacts directory may include different kind of contact information, such as postal address, telephone number, mobile phone number, fax number and e-mail address, as is known from the Contacts directory of the Nokia 9110 Communicator for example. Preferably, this second embodiment is implemented so that first the recipient field is searched (e.g. in case of an e-mail program) to see if it is empty, and executing the name search only if the recipient field is found to be empty.

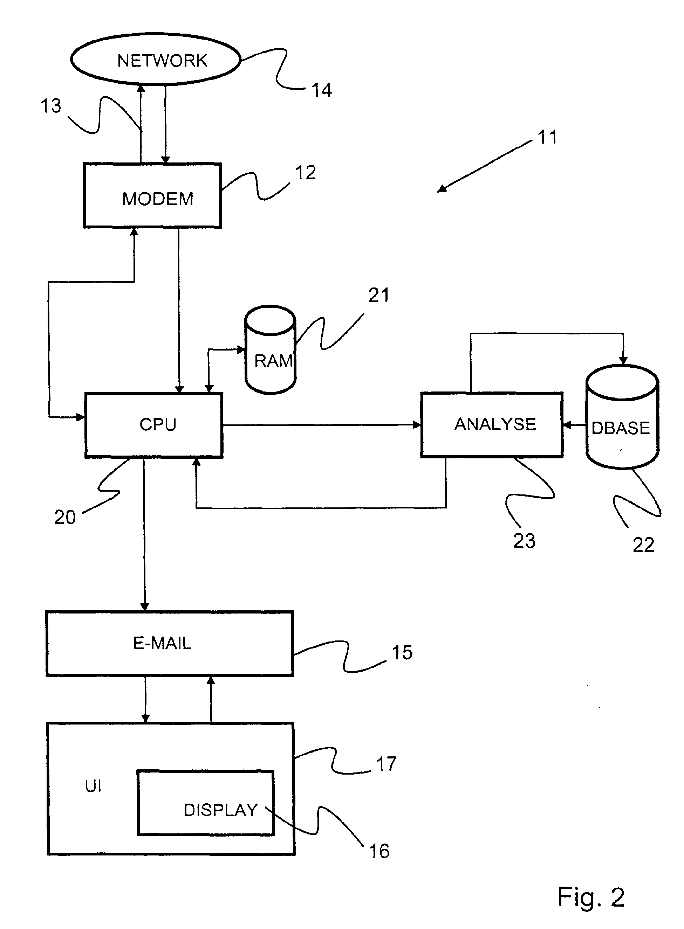

With reference to Figure 2, a personal computer (PC) 11 is shown functionally and is indicated generally by the reference numeral 11. The PC 11 has a modem 12 which enables the PC 11 to be connected to a telephone line 13 and via the telephone line to the WWW 14. It will be understood that this connection may additionally involve an Internet Service Provider (ISP) although this is not shown in the Figure. It will also be appreciated that the PC 11 may alternatively be connected to the WWW 14 via a local area network (LAN) having its own Network Access Server (NAS). Alternatively instead of the WWW there may just be a LAN within which messages are being sent.

Using a computer program stored in a memory of the PC 11 and executed by a central processing unit, the PC 11 is provided with an electronic mail program 15. This may be a conventional e-mail such as Microsoft Outlook™. A message to be sent is displayed on a display 16 of a user interface 17 of the PC 11.

Figure 2 illustrates that the invention may be implemented by suitably programming the CPU 20 of the PC 11 or using a DSP or the like. There is provided a keyword database which is stored in a memory block identified by reference numeral 22 in Figure 2.

The database 22 contains e.g. a "word" table which lists in a column every word stem which is to be used as a keyword. For example, the words "enclosure", "enclosed", "enclosing" etc are represented in the table by a single stem "enclos". The database 22 may be equipped with a stemming algorithm that produces the suitable stem upon the user entering a keyword, such as "enclosed". A suitable "stemming" algorithm is described in "Development of a Stemming Algorithm", Julie Beth Lovins, Mechanical Translation and Computational Linguistics, 11, 22-31, 1968. In a second column of the table the activity related with the keyword can be listed, which in this case is checking whether there is a file attachment and if not, issuing a notification to the user, and preferably also opening pop-up window or the like for attaching the missing file. In case the keyword is a name the activity is searching for the name in the contacts directory, and displaying the contacts directory options to the user for selecting as recipient address.

Returning now to the e-mail body text entered by the user and temporarily stored in the memory block 21, this text is extracted by a text analysis function 23, and compared to the word table stored in the database 22. The text analysis function 23 then scans the text contained in the e-mail message to identify keywords present therein. When a keyword is identified, the function 23 issues a notification to the user right away and opens up a pop-up window for including a missing attachment file in a first embodiment described herein. This can all happen in one and the same application, i.e. in the e-mail application since the feature of attaching a file is included in the e-mail application., Alternatively a contacts directory is opened to retrive the relevant contacts information for the recipient stored in database 22 in a second embodiment described herein, whereby the contacts directory is opened. This is normally jumping to a recipient selection list of stored recipients as is normal from an e-mail program and a networked computer, or as is known from the Nokia 9110 when sending a short message.

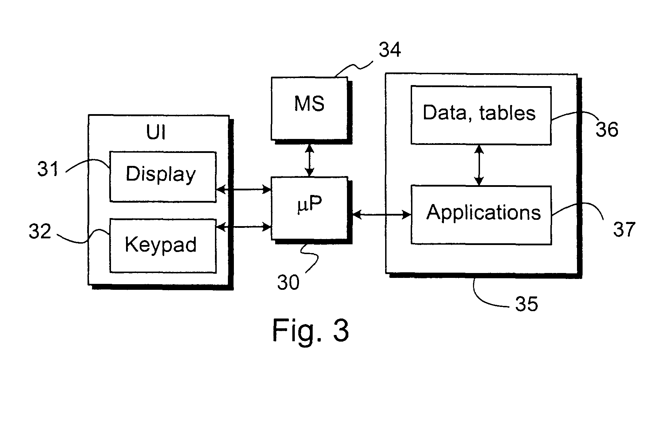

Figure 3 presents a block diagram of a mobile terminal device for executing of a method according to the invention. The operating of the device is controlled by processor 30, which controls display 31 and keys 32 of user interface UI, and possible communication part 34, which can be a transceiver according to a mobile communications system and via which communication is done over the mobile communications network. Communication can be so called connection-oriented communication or connectionless communication. Memory 35 is in connection with processor 30, which memory can comprise volatile and non-volatile memory. Keywords and data are stored in memory 35, for example table 36, for applications short messaging application 37.

This paper presents the implementation and embodiments of the invention with the help of examples. It is obvious to a person skilled in the art, that the invention is not restricted to details of the embodiments presented above, and that the invention can be implemented in another embodiment without deviating from the characteristics of the invention. Thus, the presented embodiments should be considered illustrative, but not restricting. Hence, the possibilities of implementing and using the invention are only restricted by the enclosed patent claims. Consequently, the various options of implementing the invention as determined by the claims, including the equivalent implementations, also belong to the scope of the present invention.

## Claims

1. A method of sending an electronic message from a terminal device to at least one recipient, the terminal device being connected to a network and comprising a display and means for entering a message, **characterised in that** the method comprises:
storing a predefined keyword and associating the stored keyword with a predefined activity,
entering a message for sending on the terminal device,
searching for a predefined keyword in the entered message before allowing the message to be sent, and
in response to finding a predefined keyword performing the predefined activity associated with the particular keyword, and thereafter allowing the message to be sent.

2. A method according to claim 1, **characterised in that** the keyword relates to the possibility of there being a file attached to the electronic message, and the activity is checking whether a file is attached, and issuing a notification to the user of the terminal device if there is no file attached to the message.

3. A method according to claim 1, **characterised in that** the keyword is a name and the activity is searching for a corresponding name in a contacts directory stored in the first terminal device, and if the name is found in the contacts directory, automatically one of entering and offering to be entered the contacts information of the found name as a recipient address of the electronic message.

4. A method according to claim 3, **characterised in that** the contacts information is a telephone number.

5. A method according to claim 3, **characterised in that** the contacts information is an electronic mail address.

6. A method according to claim 4, **characterised in that** the contacts directory is a telephone directory.

7. A terminal device (11) comprising an application (15, 37) for sending an electronic message over a network (4), the terminal device being connected to the network (4) and further comprising a display (16,31) and means (17, 32) for entering a message, **characterised in that** the terminal device comprises:
means (22, 36) for storing a predefined keyword and associating (20, 30) the stored keyword with a predefined activity,
means (22, 23) for searching for a predefined keyword in a message entered before allowing the message to be sent, and
means (20, 22) for performing the predefined activity associated with the particular keyword in response to finding the particular predefined keyword, and
means (20, 30; 12, 34) for sending the message after having performed said activity.

8. A terminal device according to claim 7, **characterised in that** the device is a personal computer.

9. A terminal device according to claim 7, **characterised in that** the device is a terminal of a mobile communications network.

10. A terminal device according to claim 7, **characterised in that** the application is an electronic mail program.

11. A terminal device according to claim 7, **characterised in that** the application is a short messaging application.

12. A terminal device according to claim 7, **characterised in that** the keyword relates to the possibility of there being a file attached to the electronic message, and the predefined activity is checking whether a file is attached, whereby the terminal device is adapted to issue a notification to the user of the first terminal device if there is no file attached to the message.

13. A terminal device according to claim 7, **characterised in that** the terminal device comprises a contacts directory (22), the keyword is a name and the predefined activity is searching for a corresponding name in a contacts directory stored in the first terminal device, and if the name is found in the contacts directory, the terminal device is adapted to automatically one of enter and offer to be entered the contacts information of the found name as a recipient address of the electronic message.

14. A terminal device according to claim 13, **characterised in that** the contacts information is a telephone number.

15. A terminal device according to claim 13, **characterised in that** the contacts information is an electronic mail address.

16. A terminal device according to claim 14, **characterised in that** the contacts directory is a telephone directory.
